# EUROPÄISCHE PATENTSCHRIFT

(11) **EP 4 223 127 B1**
(45) Veröffentlichungstag und Bekanntmachung des Hinweises auf die Patenterteilung: **22.10.2025**
(21) Anmeldenummer: 22155466.0
(22) Anmeldetag: 07.02.2022
(51) Int. Cl.: A21D 2/18, A21D 13/48, B65D 65/46, A47G 19/03

(54) **GRANULAT AUS NATÜRLICHEN BESTANDTEILEN ZUR HERSTELLUNG VON WAFFELN UND GEBÄCK IM SPRITZGUSS**
GRANULES OF NATURAL COMPONENTS FOR PRODUCING WAFERS AND BISCUITS BY INJECTION MOULDING
GRANULÉS À PARTIR DE COMPOSANTS NATURELS DESTINÉS À LA FABRICATION DE GAUFRES ET DE PÂTISSERIES PAR MOULAGE PAR INJECTION

(43) Veröffentlichungstag der Anmeldung: 09.08.2023
(73) Patentinhaber: Kreavision Holding Ltd., Abu Dhabi (AE)
(72) Erfinder: Dinzinger, Lambert Dustin, 82538 Geretsried-Gelting (DE)
(74) Vertreter: Grund, Martin

(56) Entgegenhaltungen:
- EP-A1- 3 910 005
- WO-A1-91/12186
- DE-U1- 202020 107 372
- PAPACKS SALES GMBH: "Plastic Free World - Interview mit TIMO PORSCH / Geschäftsführer - periplast GmbH & Co. KG", 17 December 2021 (2021-12-17), XP55941140, Retrieved from the Internet <URL:https://www.youtube.com/watch?v=rKa17Xpmlyc> [retrieved on 20220711]
- JIANG TIANYU ET AL: "Starch-based biodegradable materials: Challenges and opportunities", ADVANCED INDUSTRIAL AND ENGINEERING POLYMER RESEARCH, vol. 3, no. 1, 1 January 2020 (2020-01-01), pages 8 - 18, XP055864646, ISSN: 2542-5048, DOI: 10.1016/j.aiepr.2019.11.003
- DATABASE GNPD [online] MINTEL; 1 February 2007 (2007-02-01), ANONYMOUS: "Filinis with Cocoa and Coconut Flakes", XP093136830, retrieved from https://www.gnpd.com/sinatra/recordpage/651835/ Database accession no. 651835
- DATABASE GNPD [online] MINTEL; 27 January 2022 (2022-01-27), ANONYMOUS: "Wafers with Apple and Gingerbread Filling", XP093136832, retrieved from https://www.gnpd.com/sinatra/recordpage/9331124/ Database accession no. 9331124
- DATABASE GNPD [online] MINTEL; 29 December 2021 (2021-12-29), ANONYMOUS: "Soda Cracker with Five Grains", XP093136835, retrieved from https://www.gnpd.com/sinatra/recordpage/9269734/ Database accession no. 9269734
- DATABASE GNPD [online] MINTEL; 28 January 2022 (2022-01-28), ANONYMOUS: "Soy Milk & Kinako Wafers", XP093136833, retrieved from https://www.gnpd.com/sinatra/recordpage/9338130/ Database accession no. 9338130
- DATABASE GNPD [online] MINTEL; 12 January 2022 (2022-01-12), ANONYMOUS: "Croissant Flavour Cracker", XP093136834, retrieved from https://www.gnpd.com/sinatra/recordpage/9302126/ Database accession no. 9302126
- DATABASE GNPD [online] MINTEL; 16 December 2021 (2021-12-16), ANONYMOUS: "Butter Biscuits", XP093136836, retrieved from https://www.gnpd.com/sinatra/recordpage/9245464/ Database accession no. 9245464

## Beschreibung

### Gebiet der Erfindung

Die vorliegende Erfindung liegt auf dem Gebiet der natürlichen, bevorzugt rein pflanzlichen Granulate. Dieses Granulat kann zur Herstellung von Waffeln und Gebäck auch in Form von Trägern von Speisen und Dips im Spritzgussverfahren verwendet werden. Das Granulat besteht dabei aus natürlichen, bevorzugt rein pflanzlichen Bestandteilen, wodurch sowohl das Granulat als auch die Produkte biologisch abbaubar und bevorzugt auch kompostierbar sind. Ein Beispiel eines Waffel-Produktes ist eine Pommesschale oder eine Eisschale. Ein Beispiel für ein Gebäck ist ein Keks. Nur unter Verwendung dieses speziellen Granulats lassen sich die Produkte im Spritzgussverfahren herstellen. Der Form des Endproduktes ist somit keine Grenze gesetzt. Die Endprodukte haben eine waffelartige bzw. keksartige Konsistenz und sind essbar. Das Granulat umfasst pflanzliche Stärke, pflanzliches Mehl und Fett und/oder Öl zu einem bestimmten Anteil, sowie optional Zusätze wie Zucker, Salz, Magnesiumstearat, Sojalecithin, Süßungsmittel, Natron, oder Karamell. Optional kann durch Zugabe von natürlicher und für Lebensmittel geeigneter Lebensmittelfarbe die Farbe des Granulats bzw. Produkts modifiziert werden und/oder durch Zugabe von natürlichen Aromen und/oder Geschmacksstoffen der Geruch und/oder der Geschmack des Granulats bzw. daraus hergestellten Produkts modifiziert werden. Das Granulat der Erfindung weist ein spezielles Verhältnis von pflanzlicher Stärke zu pflanzlichem Mehl von 1:1,6-1:5 oder 1,6:1-5:1 auf und unterscheidet sich daher von anderem rein pflanzlichen Granulat, wie beispielsweise offenbart in EP 3 910 005 A1 oder DE 20 2020 107372 U1.

### Hintergrund der Erfindung

Allein in Deutschland werden täglich tausende Waffeln und Kekse hergestellt, etwa Eiswaffeln aber auch Waffeln als Träger von Speisen und Dips wie zum Beispiel Pommesschalen oder Eisschalen. Im Vergleich zu Plastiktellern oder Papptellern mit Plastikbeschichtung sind essbare Produkte wie Waffeln beliebt, da sie biologisch abbaubar sind und meist auch verzehrt werden können. Daher werden Waffelschalen insbesondere als essbares Einweggeschirr beim "Außerhausverkauf" in Eiscafés und bei ökologisch orientierten Events verwendet. In manchen Fisch- und Fleischgeschäften werden Remoulade, Ketchup, Mayonnaise, Senf oder andere Dips z.B. zu "Fish and Chips" oder Pommes in kleinen Waffelbechern gereicht. Waffeln sind auch der häufigste Träger von Speiseeis, das oft in tütenförmigen Waffeln aber auch in Waffeln in Form von Eisschalen angeboten wird.

Solche herkömmlichen Waffeln als Träger von Speisen und Dips scheinen im ersten Moment grundsätzlich nachhaltig. Der Produktionsprozess solcher herkömmlichen Waffeln benötigt jedoch sehr viel Energie und Gas, was das erzeugte Waffelprodukt letztlich deutlich weniger nachhaltig macht als angenommen. Oftmals wird beim Waffelbacken sowie beim Keksbacken eine teigige Masse auf geformte Backplatten aufgetragen und aufgrund der gewollt porösen Struktur während des Backvorgangs zwischen zwei Backplatten "aufgeschäumt" unter Zufuhr von Gas und/oder der Verwendung von starken Backtriebmitteln. Die Nachteile von herkömmlich erzeugten Waffeln sind ein hoher Verbrauch von Gas und Elektrizität sowie der damit verbundene Preisanstieg. Ferner kann nur eine geringe Stückzahl parallel produziert werden und die Produktionszeiten sind lang. Das beim Backen eingesetzte Erdgas ist ein fossiler Brennstoff und setzt beim Verbrennen klimaschädliches Kohlendioxid (CO₂) frei. Jede zusätzliche Tonne davon heizt die Erde weiter auf. Um die Klimakrise zu bekämpfen, ist es zwingend ganz auf fossile Energien zu verzichten.

Hinzu kommt, dass durch undichte Stellen an Öl- und Gasförderanlagen und Pipelines große Mengen Methan in die Atmosphäre entweichen. Methan ist der Hauptbestandteil von Erdgas und extrem klimaschädlich. Jede Tonne davon heizt die Erde über 20 Jahre betrachtet 84 mal so stark auf wie die gleiche Menge Kohlendioxid. Im Jahr 2020 beispielsweise gelangten weltweit rund siebzig Millionen Tonnen Methan in die Umwelt.

Es ist demnach erforderlich, nicht nur durch die Bereitstellung von Waffeln als biologisch abbaubare Träger von Speisen und Dips wie Schalen und Becher umfassend Pommesschalen zu ermöglichen, sondern deren Herstellung so ökologisch und umweltschonend wie möglich zu gestalten. Dasselbe gilt für die Herstellung von Gebäck wie Keksen. Die vorliegende Erfindung leistet diesen Beitrag.

### Zusammenfassung der Erfindung

Die vorliegende Erfindung bezieht sich auf die Bereitstellung von Granulat bestehend aus natürlichen, bevorzugt rein pflanzlichen Bestandteilen. Dieses Granulat lässt sich im Spritzgussverfahren ohne Zugabe weiterer Bestandteile verarbeiten. Daher bezieht sich die Erfindung auch auf die Verwendung des Granulats im Spritzgussverfahren, sowie auf Produkte, die durch Verarbeitung des Granulats im Spritzguss hergestellt werden, wie Waffeln in Form von Trägern von Speisen und Dips sowie Gebäck wie Kekse. Die vorliegende Erfindung bezieht sich auch auf ein Verfahren zur Herstellung von Waffeln und die Herstellung von Gebäck im Spritzguss.

Das Granulat der vorliegenden Erfindung besteht aus natürlichen, bevorzugt rein pflanzlichen Bestandteilen umfassend pflanzliche Stärke und pflanzliches Mehl. Das Granulat weist dabei folgende Feststoffzusammensetzung auf:

| | |
|---|---|
| Pflanzliche Stärke | 20-65 Gew.-% |
| Pflanzliches Mehl | 10-55 Gew.-% |
| pflanzliches Fett | |
| und/oder pflanzliches Öl | 0,5-7 Gew.-% |
| optionale Zusätze | 0-35 Gew.-% |

wobei das Verhältnis von pflanzlicher Stärke zu pflanzlichem Mehl 1:1,6-1:5 oder 1,6:1-5:1 ist und wobei das Granulat eine Restfeuchte von 10-50%, bevorzugt 12-25% aufweist,
wobei die pflanzliche Stärke native Stärke ist und Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, bevorzugt Weizenstärke, Kartoffelstärke, Maisstärke, Reisstärke, Tapiokastärke oder eine Mischung davon umfasst; und
wobei das pflanzliche Mehl Weizenmehl, Reismehl, Dinkelmehl, Roggenmehl, Gerstenmehl, Hafermehl, Hirsemehl, Tapiokamehl, Mandelmehl, Guarkernmehl, Johannisbrotbaummehl, oder eine Mischung davon umfasst, und
wobei die optionalen Zusätze Zucker, Süßungsmittel umfassend Xylit, Oligofructose, Apfelextrakt, Magermilchpulver, Milch, vegane Milch, Zirtonensäure, Hühnervolleipulver, veganes Hühnervolleipulver, Salz, Natron, pflanzliche Stearate umfassend Magnesiumstearat, Karamell, Sojalecithin, und das Enzym Preventase, oder eine Mischung davon umfassen.

In einer bevorzugten Ausführungsform beträgt die Gesamtmenge an pflanzlicher Stärke und pflanzlichem Mehl mindestens 65 Gew.-% der Gesamtmasse der Feststoffe.

In einer bevorzugten Ausführungsform beträgt das Verhältnis von pflanzlicher Stärke zu pflanzlichem Mehl 1:2,5 oder 2,5:1.

Das pflanzliche Fett und/oder Öl umfasst Nussöl, Olivenöl, Rapsöl, Walnussöl, Maiskeimöl, Mandelöl, Sesamöl, Leinenöl, Avocadoöl, Erdnussöl, Palmöl, Kürbiskernöl, Traubenkernöl, Weizenkernöl, Hanföl, Distelöl, Agranöl, Maiskeimöl, Haselnussöl, Pistazienöl, Walnussöl, MohnölMacadamiaöl, Würzöl, Senföl, Trüffelöl Sonnenblumenöl, Kokosöl, Palmfett, Palmkernfett, Sonnenblumenfett, Rapsfett, oder Kokosfett, oder eine Mischung davon. Das pflanzliche Fett und/oder Öl ist bevorzugt gehärtetes pflanzliches Fett und/oder gehärtetes pflanzliches Öl. Das pflanzliche Öl ist vorzugsweise kaltgepresstes Öl.

In einem weiteren Aspekt bezieht sich die Erfindung auf die Verwendung des erfindungsgemäßen Granulats im Spritzgussverfahren.

In noch einem weiteren Aspekt bezieht sich die Erfindung auf ein Verfahren zur Herstellung von Trägern von Speisen und Dips in Form von Waffeln sowie die Herstellung von Gebäck, wobei das Verfahren ein Spritzgussverfahren ist und wobei das erfindungsgemäße Granulat das Ausgangsmaterial für das Spritzgussverfahren ist, umfassend die Schritte
a) Einfüllen des erfindungsgemäßen Granulats in die Spritzgussmaschine,
b) Spritzgiessen der Masse in eine gewünschte Form

Das erfindungsgemäße Granulat ist das alleinige Ausgangsmaterial für das erfindungsgemäße Verfahren.

In einem weiteren Aspekt betrifft die Erfindung Träger von Speisen und Dips in Form von Waffeln und und/oder Gebäck, hergestellt nach dem erfindungsgemäßen Spritzgussverfahren.

In einer bevorzugten Ausführungsform beträgt die Gesamtmenge an pflanzlicher Stärke und pflanzlichem Mehl im Träger von Speisen und Dips mindestens 65 Gew.-% der Gesamtmasse.

In einer bevorzugten Ausführungsform beträgt das Verhältnis von pflanzlicher Stärke zu pflanzlichem Mehl im Träger von Speisen und Dips 1:2,5 oder 2,5:1.

Die pflanzliche Stärke ist eine native Stärke und umfasst Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, oder eine Mischung davon, bevorzugt Weizenstärke, Kartoffelstärke, Maisstärke, Reisstärke, Tapiokastärke oder eine Mischung davon.

Das pflanzliche Mehl umfasst Weizenmehl, Reismehl, Dinkelmehl, Roggenmehl, Gerstenmehl, Hafermehl, Hirsemehl, Tapiokamehl, Mandelmehl, Guarkernmehl, Johannisbrotbaummehl, oder eine Mischung davon.

Der erfindungsgemäße Träger von Speisen und Dips in Form von Waffeln, bzw. das Gebäck ist essbar. Die Waffeln und das Gebäck können entweder süß oder salzig schmecken.

Das Granulat sowie der erfindungsgemäße Träger von Speisen und Dips in Form von Waffeln, bzw. das Gebäck ist vollständig biologisch abbaubar und noch bevorzugter kompostierbar.

In einer Ausführungsform kann der erfindungsgemäße Träger von Speisen und Dips in Form von Waffeln, bzw. das Gebäck jegliche im Spritzguss herzustellende Form aufweisen. So kann der Träger die Form einer Eiswaffel, und/oder eine für den Transport von Lebensmitteln, Speisen und Dips geeignete Form, umfassend die Form eines Tellers, einer Schale, einem Becher, einer Pommesschale, oder einer Dessertschale aufweisen. Das Gebäck kann eine gewohnte Form aufweisen, zB. flache Kekse wie Butterkekse, aber auch und bevorzugt 3D-förmiges Gebäck, zum Beispiel in Form eines dreidimensionalen Tieres kann unter Verwendung des bereitgestellten Granulats im Spritzguss hergestellt werden.

### Vorteile der Erfindung

Herkömmliches Kunststoffgranulat ist die typische Lieferform von thermoplastischen Kunststoffen der Rohstoffhersteller für die kunststoffverarbeitende Industrie, speziell für das Spritzgussverfahren. Es ist aufgrund seiner Rieselfähigkeit ein Schüttgut wie Sand oder Kies und damit ebenso einfach zu portionieren und zu transportieren. Das Granulat der vorliegenden Erfindung besteht aus rein natürlichen Bestandteilen, teilt jedoch die positiven Eigenschaft der Darreichungsform als Granulat mit derjenigen der Kunststoffgranulate. Das vorliegend verwendete Material lässt sich problemlos zu jeglicher Art von Granulaten oder Schüttgut verarbeiten und auch das anschließende Weiterverarbeiten des Granulats gestaltet sich problemlos.

Das Granulat der vorliegenden Erfindung, seine Verwendung im Spritzgussverfahren, das erfindungsgemäße Spritzgussverfahren, sowie die auf diesem Wege aus dem erfindungsgemäßen Granulat hergestellten Waffeln und Gebäck, erweisen sich zudem in vielerlei Hinsicht als vorteilhaft.

Durch die Verwendung der pflanzlichen Rohstoffe Stärke (z.B. Kartoffelstärke), pflanzliches Mehl (z.B. Weizenmehl), pflanzliches gehärtetes Fett (zB. Kokosfett), sowie den optionalen Zusätzen wie Süßungsmittel ist das Granulat, sowie die daraus erzeugten Produkte der vorliegenden Erfindung, im Gegensatz zu herkömmlichen Plastikprodukten im Bereich Einweggeschirr und Verpackung leicht recycelbar, vollständig biologisch abbaubar und natürlich kompostierbar. Die Kompostierdauer einer Schale, welche aus erfindungsgemäßem Granulat hergestellt wurde, liegt bei unter 50 Tagen, bevorzugt unter 30 Tagen. Eine optionale Beschichtung (z.B. eine pflanzliche Wachsbeschichtung) der Schalen verlängert den Kompostiervorgang um nur wenige Tage, sodass auch beschichtete Träger von Speisen und Dips aus Granulat der vorliegenden Erfindung innerhalb 4-8 Wochen kompostierbar sind. Ferner ist das Granulat der vorliegenden Erfindung sowie die daraus hergestellten Produkte gemäß EN 13432, Version 2000-12 kompostierbar. Das Granulat und die daraus hergestellten Gebrauchsgegenstände sind zudem auch gartenkompostierbar. Zudem ist das Granulat und die daraus hergestellten Produkte ultrakompostierbar, also in weniger als 50 Tagen kompostiert. Dies gilt zum Beispiel nicht für Bioplastik/Biokunststoff wie PLA.

Die pflanzliche Stärke sowie das pflanzliche Mehl wird als Naturprodukt, also in natürlicher, nicht modifizierter und nicht behandelter Form eingesetzt und wird auch während des Herstellungsvorgangs zu Granulat nicht chemisch verändert. Dies schont die Umwelt und macht das Granulat noch natürlicher. Auch das im Herstellungsprozess entstehende Extrudat, welches getrocknet und zu Granulat geschnitten wird, wird nicht chemisch/physikalisch nachbehandelt, um es zu verfestigen und/oder zu stabilisieren.

Das vorliegende Granulat umfasst ferner keine Biokunststoffe, keine biobasierten Kunststoffe und keine erdölbasierten Biopolymere. Unter Biokunstsoffen werden alle Biopolymere die durch chemische Veränderung der natürlichen und/oder pflanzlichen Rohstoffe gewonnen werden verstanden. Auch bestimmte erdölbasierte Polymere sind biologisch abbaubar und daher per Definition "Biopolymere". Erdölbasiere Polymere umfassen Polyvinylalkohol (PVA), Polybutylenadipat-terephthalat (PBAT), Polybutylensuccinat (PBS), Polycaprolactone (PCL) und Polyglycolid (PGA). Erdölbasierte Polymere werden vorliegend nicht verwendet und sind kein Bestandteil des Granulats oder der daraus gewonnenen Waffeln oder des daraus gewonnenen Gebäcks. Biobasierte Kunststoffe, die durch umfassende chemische Veränderung biologischer Rohstoffe hergestellt wurden (z. B. Polylactide (PLA) aus mit Hilfe der weißen Biotechnologie erzeugter Milchsäure), werden nicht vom Granulat oder den daraus hergestellten Gebrauchsgegenständen umfasst. Ferner zählen neben Polylactid (PLA), auch Polyhydroxyalkanoate (PHA), Polyhydroxybutyrat (PHB), Epoxyacylate und Stoffe auf Ligninbasis wie Thermoplaste zu den biobasierten Kunststoffen. Nichts davon wird von der vorliegenden Erfindung umfasst.

Durch die Verwendung des Granulats stellt sich der Herstellungsprozess eines biologisch abbaubaren und kompostierbaren Trägers von Speisen und Dips in Form einer Waffel energiesparend und zeiteffizient dar. Wie eingangs erläutert, wird für die Herstellung herkömmlicher biologisch abbaubarer Träger von Speisen und Dips wie etwa (Pommes)Schalen aus Waffelteig viel Energie durch lange wenig ergiebige Herstellungszyklen benötigt. Außerdem wird durch die Verwendung von Gas CO₂ freigesetzt. Spritzgussmaschinen werden elektrisch betrieben und eröffnen hierbei durch geeignete Maschineneinstellung nicht nur ein großes Einsparpotenzial an Kosten sondern auch im Hinblick auf benötigtes Erdgas und dadurch erzeugte Treibhausgase. Bevorzugt kann hierbei Ökostrom verwendet werden. Außerdem sind die Anschaffungspreise für die Materialien und Maschinen zur Herstellung von Waffeln im Verhältnis zum erzeugten Output viermal so hoch als beim Spritzgussverfahren. Darüber hinaus haben herkömmliche Waffel-Maschinen einen wesentlich höheren Platzbedarf. Elektrische Spritzguss-Maschinen verbrauchen im Verhältnis zu herkömmlichen Presswaffel-Maschinen nur zirka ein Zehntel der Energie und stoßen einen erheblich geringeren Anteil an Co2 aus. Dasselbe gilt für die Herstellung von Gebäck wie Keksen.

Unter Anwendung des hierin beschriebenen Herstellungsverfahrens unter Verwendung des erfindungsgemäßen Granulats, können schnelle und daher optimale Prozess-Zykluszeiten von 6-90 Sekunden, durchschnittlich 30 Sekunden, ab Einfüllung des Granulats bis Herausnehmen des Produkts aus der Spritzgussform erzielt werden. Das bereitgestellte Granulat lässt sich problemlos in Kombination mit einem Vakuum-Befüller verwenden. Eine automatische Befüllung der Spritzgießmaschine ermöglicht dann eine Maschinenlaufzeit von 24h/Tag. Die Anzahl der pro Zyklus herstellbaren Waffeln/Gebäck ist abhängig von der Größe und Schließkraft der Spritzgussmaschine-Eine 300 Tonnen Spritzgussmaschine der Firma Wittmann Battenfeld kann dabei beispielsweise 36 Waffeln in Form von Eisschalen in einem Prozess-Zyklus herstellen.

Ein gewöhnlich zur Herstellung von Waffeln und Gebäck verwendeter Teig, welcher deutlich flüssig ist, könnte über die Plastifiziereinheit der Spritzgießmaschine nicht verarbeitet werden. Ein solcher Teig würde gar nicht erst in die Maschine eingezogen werden. Zudem würde die Verwendung eines flüssigen Teigs im Vergleich zum vorliegenden Granulat aufgrund einer hohe Fehlerquote, welche zu Verlusten führt, keine Prozesssicherheit bieten. Für die Herstellung von Waffeln und Gebäck im Spritzguss ist die Verwendung des bereitgestellten Granulats mit seiner angegebenen Restfeuchte unerlässlich.

Der Anteil an Restfeuchte beeinflusst die Dichte des erzeugten Produkts beziehungsweise dessen Wandstärke. Die Produkte können im Spritzgussverfahren mit einer hohen Dichte hergestellt werden. Eine Wandstärke mit hoher Dichte bietet einen Vorteil in der Stabilität des Produktes. Zudem wird hierdurch Material gespart, was in den Bereichen Ökobilanz als auch beim Preis für das Endprodukt positiv auswirkt. Zudem bestimmt es die Luftlöcher im Material. Dies hängt aber auch mit der zugeführten Hitze im Kanal sowie der jeweiligen Form zusammen. Wenn ein Produkt erzeugt werden sollte, welches mehr Lufträume aufweist, ist bei der Einspritzung weniger Material nötig, da dieses sich in der Form ausdehnt. Zudem gewährleistet ein Entlüftungskanal das Entweichen der Dämpfe, dies ist ein wesentlicher Bestandteil eines sicheren Produktionsprozesses. Wenn dies nicht gewährleistet ist wird die Form nicht optimal gefüllt. Somit führt das zu Löchern, Rissen oder einem nicht gleichmäßigen Füllstand. Ebenfalls kann die Restfeuchte im Granulat Unterschiede im erzeugten Produkt hervorrufen und bei den Zyklus-Zeiten beim Formungsprozess erhebliche Zeitersparnis bewirken. Dennoch ist zu erwähnen, dass ein gewisser Wasseranteil von Nöten ist, um ein Verdichten und ein Homogenisieren des Granulats zu garantieren. Ebenfalls muss ein gewisser Wasseranteil im Granulat sein, um diverse Vorteile, wie Oberflächen- Qualitäts-, Fließeigenschaft und Gleichmäßigkeit beim Erzeugen des Produktes zu gewährleisten.

Zudem sind den Formen der im Spritzguss hergestellten Waffeln und des im Spritzguss hergestellten Gebäcks keine Grenze gesetzt. Somit kann jegliche gewünschte Form verwirklicht werden, wie zum Beispiel dreidimensionale Tierkekse, welche sich optisch deutlich von den bestehenden Tierkeksen, welche immer eine platte Unterseite aufweisen, unterscheiden.

### Abbildungen

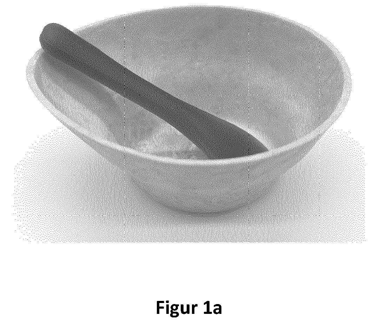

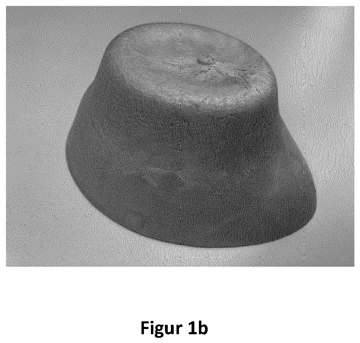

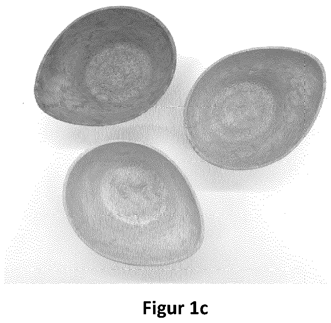

**Abbildung 1****:** Beispiel eines erfindungsgemäßen Trägers von Speisen und Dips. Abb. 1a zeigt eine Eisschale in schräger Draufsicht. Abb. 1b zeigt die Unterseite dieser Eisschale in schräger Draufsicht. Die Einspritzstelle der Form ist noch leicht sichtbar. Abb. 1c zeigt die Eisschale in verschiedenen Farben. Dies wird erreicht indem zum Granulat beim Einfüllen in die Spritzgussanlage zudem lebensmittelechte Farbe dazu gegeben wird. Alternativ kann bereits das Granulat selbst gefärbt sein.

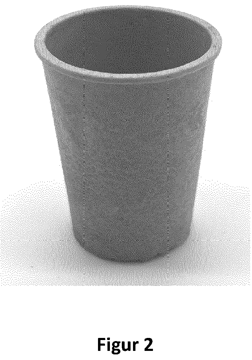

**Abbildung 2****:** Beispielhafte Ausführungsform von Trägern von Speisen. Abgebildet ist ein Becher für Saucen und Dips.

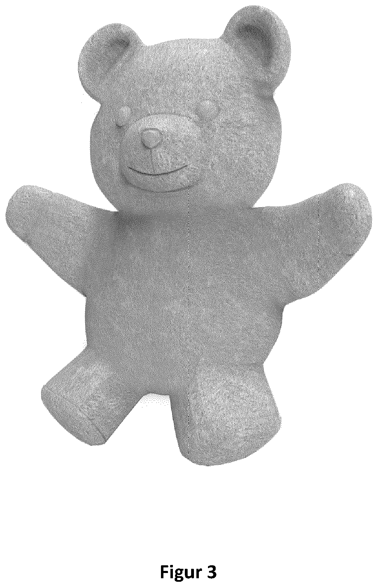

**Abbildung 3****:** Beispielhaftes dreidimensionales Gebäck.

### Detaillierte Beschreibung der Erfindung

### Herstellung des Granulats

Zunächst werden alle trockenen und flüssigen Bestandteile abgewogen, miteinander vermischt und anschließend verknetet bis sich eine homogene Masse bildet. Diese kann in verschiedenster Weise einem Extruder zugeführt werden. Der erzeugte feste Teig kann beispielsweise über eine sogenannte automatische Zuführung (AZ) geschehen, die in Form eines Trichters in Verbindung mit einer Schnecke in die Einzugszone des Extruders zuführt. Außerdem kann der Teig als "Wurst", "Ball" oder "Flocken" beziehungsweise "Pellets" oder dergleichen portioniert werden, um einen problemlosen Einzug zu garantieren. Das Granulat wird mittels der Schnecke nach vorne transportiert und gleichzeitig homogenisiert. Jegliche Art von Schnecke wie zum Beispiel: Single-, Double- oder Spezial- Einwellen-Extruder oder Ko-Kneter können eingesetzt werden. Optional kann anschließend in der Entgasungszone, vor dem Formgeben, das Wasser der Masse entzogen werden. Dies geschieht in der Dekompressionszone, wo ein Entgasungs-Dom/Kammer/Ventil angebracht ist. Die Masse wird nun über Düsen zu Strängen geformt und mittels Luft abgekühlt. Anschließend schneidet ein rotierendes Messer die Stränge in wenige Millimeter lange Abschnitte. Alternativ können die Stränge direkt mit rotierender Klinge an der Düse oder Düsen geschnitten und die Schnitte anschließend ebenfalls an der Luft getrocknet werden. Das erzeugte Granulat lässt sich nun in Rohrleitungen transportieren oder in Säcke oder andere Gebinde verpacken.

Die Restfeuchte des Granulats bestimmt die Dichte des erzeugten Endprodukts.

Die vorliegende Erfindung bezieht sich auch auf ein Verfahren zur Herstellung des erfindungsgemäßen Granulats, wobei das Verfahren die folgenden Schritte umfasst:
a) Herstellen einer Mischung, umfassend Mehl, Stärke, Fett und Wasser und optional einen oder mehrere der Zusätze umfassend Zucker, Salz, Magnesium, Sojalecithin, Süßungsmittel, Natron, Karamell, Glycerin, pflanzliche Fasern aus Weizen, Bambus, pflanzliche Stearate, optional umfassend die Beimischung von Wachsen.
b) Formen der Mischung aus a) zu einem Granulatstrang in einer Extrudermachine,
c) Schneiden des in b) erzeugten Granulatstrangs zu Granulat;
d) Aushärten des in Schritt c) erzeugten Granulats.
e) Optional: Entfeuchten des in Schritt c) erzeugten Granulats.
f) Optional: Befeuchten des in Schritt c) erzeugten Granulats vor der Weiterverarbeitung zu einem Produkt im Spritzguss.

Die vorliegende Erfindung bezieht sich auch auf eine Alternative des oben dargestellten Verfahrens zur Herstellung des erfindungsgemäßen Granulats, wobei Schritt d) vor Schritt c) durchgeführt wird. Das Verfahren umfasst dann die folgenden Schritte:
a) Herstellen einer Mischung, umfassend Mehl, Stärke, Fett und Wasser und optional einen oder mehrere der Zusätze umfassend Zucker, Salz, Magnesium, Sojalecithin, Süßungsmittel, Natron, Karamell, Glycerin, pflanzliche Fasern aus Weizen, Bambus, pflanzliche Stearate, optional umfassend die Beimischung von Wachsen.
b) Formen der Mischung aus a) zu einem Granulatstrang;
c) Aushärten des in Schritt b) erzeugten Granulatstrangs;
d) Schneiden des in c) ausgehärteten Granulatstranges zu Granulat.

### Konkrete Zusammensetzungen der Mischung aus Schritt a) zur Herstellung des erfindungsgemäßen Granulats:

### Variante A:

| | |
|---|---|
| Stärke: | 5 kg |
| Weizenmehl: | 2 kg |
| Zucker: | 1 kg |
| Kokosfett: | 50 g |
| Salz: | 150 g |
| Natron: | 40 g |
| Magnesiumstearat: | 10 g |
| Karamell: | 10 g |
| Wasser: | 4 Liter |

### Variante B:

| | |
|---|---|
| Stärke: | 2 kg |
| Weizenmehl: | 5 kg |
| Zucker: | 1,5 kg |
| Kokosfett: | 500 g |
| Salz: | 100 g |
| Natron: | 20 g |
| Magnesiumstearat: | 10 g |
| Karamell: | 15 g |
| Wasser: | 4,4 Liter |

### Variante C:

| | |
|---|---|
| Stärke: | 2 kg |
| Weizenmehl: | 5 kg |
| Sojalecithin | 0,4 kg |
| Zucker: | 1,5 kg |
| Kokosfett: | 500 g |
| Salz: | 100 g |
| Natron: | 20 g |
| Magnesium- | |
| stearat: | 10 g |
| Karamell: | 15 g |
| Wasser: | 4,4 Liter |

### Variante D:

| | |
|---|---|
| Stärke: | 2 kg |
| Weizenmehl: | 5 kg |
| Sojalecithin: | 0,4 kg |
| Zucker: | 1,5 kg |
| Kokosfett: | 500 g |
| Salz: | 100 g |
| Natron: | 20 g |
| Magnesiumstearat: | 10 g |
| Karamell: | 15 g |
| Wasser: | 5 Liter |

### Variante E:

| | |
|---|---|
| Stärke: | 2 kg |
| Weizenmehl: | 5 kg |
| Sojalecithin | 0,4 kg |
| Zucker: | 1,5 kg |
| Kokosfett: | 400 g |
| Salz: | 150 g |
| Natron: | 20 g |
| Magnesium: | 10 g |
| Karamell: | 10 g |
| Preventase: | 0,08 kg |
| Wasser: | 5 Liter |

### Variante F;

| | |
|---|---|
| Stärke: | 4 kg |
| Weizenmehl: | 1 kg |
| Sojalecithin | 0,4 kg |
| Zucker: | 1,5 kg |
| Kokosfett: | 500 g |
| Salz: | 100 g |
| Natron: | 20 g |
| Magnesiumstearat: | 10 g |
| Karamell: | 15 g |
| Mandel Milch: | 5 Liter |

### Variante G:

| | |
|---|---|
| Stärke: | 6 kg |
| Weizenmehl: | 3 kg |
| Sojalecithin | 0,4 kg |
| Zucker: | 1,5 kg |
| Kokosfett: | 400 g |
| Salz: | 150 g |
| Natron: | 20 g |
| Magnesium: | 10 g |
| Karamell: | 10 g |
| Preventase: | 0,08 kg |
| Wasser: | 5 Liter |

### Variante H:

| | |
|---|---|
| Stärke: | 5 kg |
| Weizenmehl: | 2 kg |
| Xylit: | 1 kg |
| Kokosfett: | 400 g |
| Salz: | 150 g |
| Natron: | 40 g |
| Magnesium-stearat: | 10 g |
| Karamell: | 10 g |
| Milch: | 4 Liter |

In Schritt a) werden die Bestandteile der Mischung vermischt. Dies geschieht mit einem Mischer, der die Mischung zu einer homogenen Masse verrührt. Die Mischung kann optional auch Glycerin, pflanzliche Fasern, Konservierungsstoffe, Aromen, Geschmäcker, Wachs (bevorzugt Carnauba- oder Sojawachs), Naturkautschuk (bevorzugt als Emulsion oder Pulver), pflanzliches Stearat (bevorzugt Magnesiumstearat), Öl (bevorzugt Nussöl), Lecithine umfassen. Hierbei sollten alle pulvrigen, fasrigen- und alle flüssigen Bestandteile zuerst jeweils separat gemischt werden, bevor alle Bestandteile vermischt werden. Dies vermeidet ein Verklumpen und verbessert somit ein Vermischen der einzelnen Bestandteile.

In Schritt b) wird die Mischung aus Schritt a) zu einem oder mehreren Granulat-Strängen geformt. In einer Ausführungsform geschieht dies, indem die pulverige- bis zähflüssige Masse direkt in einen Extruder gegeben wird. Es kann sich hierbei um einen Single- oder Twin-Extruder oder auch ähnlichen Extrudern handeln. Die erzeugte Masse kann in bevorzugter Variante mit einer thermoplastischen Schnecke verdichtet und unter Energiezufuhr plastifiziert werden. Es kann sowohl eine thermoplastische Schnecke als auch eine fördernde Schnecke verwendet werden. Es entsteht eine homogene Mischung. In einer Ausführungsform wird die homogene Mischung granuliert, indem sie durch die optional beheizte Förderschnecke zu Düsen geführt und durch sie hindurchgepresst wird. Auf diese Weise wird die Masse zu Granulat-Strängen geformt. In einer Ausführungsform werden die Granulat-Stränge anschließend optional mittels Ventilatoren gekühlt und mittels Entfeuchtern entfeuchtet und getrocknet. In einer anderen Ausführungsform werden die Granulat-Stränge mit Druckluft gekühlt und getrocknet. In einer anderen Ausführungsform werden die Granulat-Stränge direkt mit einer rotierenden Klinge geschnitten und anschließend gekühlt und getrocknet. Dies vermeidet ein Verkleben der einzelnen Granulate.

In Schritt c) werden die Granulat-Stränge aus Schritt b) zu Granulat geschnitten. Optional werden die dazu verwendeten Klingen mit Wasser gekühlt. Es ergibt ein Granulat in Perlen- oder Linsenform.

In Schritt d) wird das Granulat in bevorzugten Ausführungsformen bis zur vollständigen Trocknung anschließend getrocknet bzw. gehärtet. Dies kann zum Beispiel durch Trocknung mittels Belüftung/Ventilation oder Luftentfeuchter oder desgleichen geschehen. In manchen Ausführungsformen wird das Produkt in eine "Cooling and Cutter"-Maschine eingeführt, wo es durch Ventilatoren getrocknet und dadurch gehärtet wird. In manchen Ausführungsformen findet die Härtung mittels Wärme statt. Dies kann alternativ oder zusätzlich zur Härtung mittels Belüftung/Ventilation geschehen. In manchen Ausführungsformen wird die Härtung mittels Wärme in einem Heiztunnel durchgeführt. Der Temperaturbereich liegt hierbei zwischen 25 °C und 140 °C, bevorzugt zwischen 45 °C und 120°C, noch bevorzugter bei 85°C. In manchen Ausführungsformen wird die Härtung mittels Luftentfeuchter gehärtet.

In einer alternativen Ausführungsform der Erfindung wird nach Schritt b) der Granulatstrang zunächst als Ganzes getrocknet und erst anschließend, in bereits festem Zustand, in die gewünschte Länge zu Granulat geschnitten. Die Verfestigung kann beispielsweise in einem Trocknungstunnel oder durch Ventilatoren erfolgen. Das Granulat dieser Ausführungsform ist würfel-, perlen- oder zylinderförmig.

In weiteren Ausführungsformen wird das Granulat durch Einbringung von pflanzlichen Wachsen veredelt und so resistenter gegen Wasser und Öl.

In weiteren Ausführungsformen wird das Granulat durch Einbringung von Konservierungsstoffen resistenter gegen Schimmel und das Verfallsdatum wird verlängert.

In weiteren Ausführungsformen wird das Granulat durch Einbringung von Düften und Geschmacksnoten veredelt.

In weiteren Ausführungsformen wird das Granulat durch Einbringung von pflanzlichen Fasern veredelt, um somit stabilere und reiß- und abriebfestere Produkte zu erzeugen.

Das Verfahren zur Herstellung des Granulats kann optional weitere Schritte umfassen. Zum Beispiel können der Mischung aus a) Farbstoffe zugemischt werden, um ein farbiges Granulat zu erhalten. In bevorzugten Ausführungsformen sind die verwendeten Farbstoffe pflanzliche Farbstoffe.

Das Verfahren zur Herstellung des Granulats kann optional weitere Schritte umfassen. Zum Beispiel können der Mischung aus a) Duftstoffe zugemischt werden, um ein gut riechendes Granulat zu erhalten. In bevorzugten Ausführungsformen sind die verwendeten Duftstoffe pflanzliche Farbstoffe.

In manchen Ausführungsformen beinhaltet das Verfahren die Bestrahlung des Granulats oder Produktes zur Sterilisation mit UV-Licht.

### Herstellung der Spritzgussprodukte

Das Granulat kann im Folgenden im Spritzgussverfahren z.B. zu hierhin dargestellten Waffeln umfassend Träger von Speisen und Dips wie Einweggeschirr, und Gebäck umfassend Kekse im Spritzguss verarbeitet werden.

### Spritzgießen:

Nahezu alle Größen und Formen von Teilen können im Spritzgussverfahren hergestellt werden. Dabei sorgt z.B. ein Schnecken-Plastifizier-Aggregat für die Plastifizierung der Masse, wobei sich die Schnecke während des Verdichtungsvorgangs langsam nach hinten bewegt und vor der Schneckenspitze ein Schmelzpolster bildet. Ist die für einen Teil benötigte Menge erreicht, fährt die Schnecke vor und presst die Schmelze/ Masse durch die erwärmte Düse und durch Angusskanäle unter Druck in den Hohlraum der kalten oder warmen Form, des sogenannten Werkzeugs. Die Masse kühlt nun im Werkzeug ab oder backt aus und wird als gebrauchsfertiges "Formteil" ausgeworfen.

Das Granulat sollte eine maximale Restfeuchte von 50% aufweisen, da dieses sonst schwer von der Plastifiziereinheit eingezogen werden kann. Die optimale Restfeuchte besteht bevorzugt zwischen 12-25%, da diese der zu erzeugenden Waffel bzw. dem zu erzeugenden Gebäck einen festen Biss beschert und somit der Knuspereffekt zur Geltung kommt. Die Restfeuchte sollte 10% jedoch nicht unterschreiten, da das Produkt sonst leicht brüchig ist. Die Restfeuchte des Granulats ist essenziell wichtig für die Dichte und Stabilität des erzeugten Produkts.

Das Granulat wird über einen Trichter in die Spritzgießanlage eingefüllt und über die Plastifiziereinheit eingezogen. In der Plastifiziereinheit der Spritzgussmaschine wird das Granulat dann durch kinetische Wärmeeinwirkung homogenisiert und verdichtet und anschließend mit großem Druck in eine gewünschte Form eingespritzt. Die Schnecke sollte eine Förderschnecke sein und kann auf 70 C° erhitzt werden, um die Zykluszeit des Formensund Backens zu verringern. Die Förderschnecke erfordert in einigen Fällen, je nach Einspritzstrom, eine Rückschlagklappe, um ein Herausschießen des Materials aufgrund von Wasserverdampfung zu verhindern. Die Form sollte je nach Wandstärke und Form des zu erzeugenden Produktes zwischen 140°C und 220°C.

In der Spritzgussform wird die eingespritzte Masse dann gebacken. Die Backzeit in der Spritzgussform sollte mindestens 10 Sekunden und maximal 2 Minuten aufweisen. Die optimale Backzeit beläuft sich zwischen 20-45 Sekunden. Dennoch ist zu erwähnen, dass die Wandstärke des erzeugten Produkts essenzielle Auswirkungen auf die Backzeit hat. Je dicker die Wandstärke, desto länger die Backzeit. Die Backtemperatur liegt bevorzugt zwischen 120-250 Grad. Besonders bevorzugt zwischen 160-220 Grad. Da die zugeführte Temperatur und Backzeit essenziell im Verhältnis stehen, können diese zwei Variablen aneinander angepasst werden, um ähnliche Erzeugnisse hervorzurufen. Dennoch ist zu erwähnen, dass sowohl höhere Temperaturen als auch längere Backzeiten im Verhältnis zur Wandstärke individuell an das zu erzeugende Gebäck-Produkt angepasst werden sollten. Außerdem können durch die Backzeit und die zugeführte Hitze verschiedene Grade erzeugt werden. Der Backgrad bezieht sich hierbei auf die Farbe der Waffel, welche anhand von den Parametern der zugeführten Hitze und Backzeit dunkler oder heller wird.

Ein Entformen kann über Druckluft, Abstreifen, Stifte, Saugknöpfe oder Ähnlichem geschehen.

### Bevorzugte Ausführungsformen

Das Granulat der vorliegenden Erfindung besteht aus natürlichen, bevorzugt rein pflanzlichen Bestandteilen umfassend pflanzliche Stärke und pflanzliches Mehl. Das Granulat weist dabei folgende Feststoffzusammensetzung auf:

| | |
|---|---|
| Pflanzliche Stärke | 20-65 Gew.-% |
| Pflanzliches Mehl | 10-55 Gew.-% |
| pflanzliches Fett und/oder pflanzliches Öl | 0,5-7 Gew.-% |
| optionale Zusätze | 0-35 Gew.-% |

wobei das Verhältnis von pflanzlicher Stärke zu pflanzlichem Mehl 1:1,6-1:5 oder 1,6:1-5:1 ist und wobei das Granulat eine Restfeuchte von 10-50%, bevorzugt 12-25% aufweist.

In bevorzugten Ausführungsformen ist die pflanzliche Stärke Weizenstärke.

Die Form der Granulatstücke ist variabel. Das Granulat kann zum Beispiel linsenförmig, zylindrisch oder perlenförmig sein. Der Durchmesser der Granulatstücke ist variabel. Der Durchmesser der Granulatstücke kann 1-5 mm sein. In bevorzugten Ausführungsformen ist der Durchmesser des Granulats 1-3 mm. In besonders bevorzugten Ausführungsformen hat das Granulat einen Durchmesser von 2-3 mm. Beispielhafte Durchmesser der einzelnen Granulat-Stücke sind 1 mm, 1,5 mm, 2 mm, 2,5 mm, 3 mm, 3,5 mm, 4 mm, 4,5 mm, 5mm.

Das Granulat kann zu einem Lebensmittel, Waffeln, Gebäck, essbaren Einwegartikeln, Gebrauchsgegenständen und Verpackungen verarbeitet im Spritzguss werden.

Die vorliegende Erfindung bezieht sich auch auf ein essbares Back-Produkt, hergestellt aus dem erfindungsgemäßen. Das Produkt kann ein Lebensmittel, ein essbares Einwegprodukt, oder ein essbarer Gebrauchsgegenstand sein.

Die Härte der Waffel oder des Gebäcks ist variabel. In manchen Ausführungsformen ist die Waffel oder das Gebäck hart. In diesem Fall ist die Wandstärke des Produkts sehr dicht. In manchen Ausführungsformen ist die Waffel oder das Gebäck luftig knackig und leicht zu durchbeißen. Die Wandstärke weißt eine gerinere Dichte auf. Dies lässt sich unter anderem über die Restfeuchte im Granulat bzw. in der plastifizierten Masse in der Spritzgiessanlage regulieren.

### Beispiele

### Beispiel 1: Herstellung von Granulat

Das Ausgangsmaterial für das Granulat bestand aus:

| | |
|---|---|
| Stärke: | 5 kg |
| Weizenmehl: | 2 kg |
| Zucker: | 1 kg |
| Kokosfett: | 50 g |
| Salz: | 150 g |
| Natron: | 40 g |
| Magnesium-stearat: | 10 g |
| Karamell: | 10g |
| Wasser: | 4 Liter |

Das Ausgangsmaterial wurde in einem Mischer zu einer Mischung verrührt, zunächst die festen Bestandteile getrennt von den flüssigen Bestandteilen, und anschließend Vermischen beider Mischungen, bis sich alle Bestandteile der letztendlichen Mischung gut vermischt haben (ca. 10-15 Min).

Anschließend wurde die noch etwas pulverige Masse direkt in einen Extruder gegeben. Dieser zog die Masse ein, verdichtete und plastifizierte sie unter Energiezufuhr und sorgte gleichzeitig für eine homogene Mischung. Der beheizte Kanal der Förderschnecke wurde mit fünf Heizelementen (in der Reihenfolge: 40C°-80C°-100C°-60C°- 21C°) erhitzt und führte die Masse zu den Düsen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die sie vor dem Schnitt reinigten. So wurde ein linsenförmiges Granulat erzeugt. Im Anschluss härtete das Granulat für 2 Tage aus und wurde schließlich verpackt.

### Beispiel 2: Herstellung von Granulat

Das Ausgangsmaterial für das Granulat bestand aus:

| | |
|---|---|
| Stärke: | 2 kg |
| Weizenmehl: | 5 kg |
| Zucker: | 1,5 kg |
| Kokosfett: | 500 g |
| Salz: | 100 g |
| Natron: | 20 g |
| Magnesium-stearat: | 10 g |
| Karamell: | 15 g |
| Wasser: | 4,4 Liter |

Das Ausgangsmaterial wurde in einem Mischer zu einer Mischung verrührt, bis sich alle Bestandteile der Mischung gut vermischt haben (ca. 5-10 min).

Anschließend wurde die noch pulverige Masse direkt in einen Extruder gegeben. Dieser zog die erzeugte Masse ein, verdichtete und plastifizierte sie unter Energiezufuhr und sorgte gleichzeitig für eine homogene Mischung. Der beheizte Kanal der Förderschnecke wurde mit fünf Heizelementen (in der Reihenfolge: 45C°-75C°-100C°-60C°- 20C°) erhitzt und führte die Masse zu den Düsen und presste die Masse heraus. Auf diese Weise wurde die Masse zu Strängen geformt und von einer rotierenden Klinge zu Granulat direkt am Ausstoß geschnitten. Hierbei durchlief die Klinge Bürsten, die sie vor dem Schnitt reinigten. So wurde ein perlenförmiges Granulat erzeugt. Im Anschluss härtete mittels Luftentfeuchter das Granulat für 1 Tag aus und wurde schließlich endgültig verpackt.

### Beispiel 3: Herstellung eines Spritzguss-Produkts aus dem Granulat der Erfindung

Das Ausgangsmaterial für das Granulat bestand aus:

| | |
|---|---|
| Stärke: | 2 kg |
| Weizenmehl: | 5 kg |
| Sojalecithin | 0,4 kg |
| Zucker: | 1,5 kg |
| Kokosfett: | 500 g |
| Salz: | 100 g |
| Natron: | 20 g |
| Magnesium-stearat: | 10 g |
| Karamell: | 15 g |
| Wasser: | 4,4 Liter |

Anschließend wurde die noch pulverige Masse direkt in einen Extruder gegeben. Dieser zog die erzeugte Masse ein, verdichtete und plastifizierte sie unter Energiezufuhr und sorgte gleichzeitig für eine homogene Mischung. Der beheizte Kanal der Förderschnecke wurde mit fünf Heizelementen (in der Reihenfolge: 40C°-80C°-100C°-60C°- 21C°) erhitzt und führte die Masse zu den Düsen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor den Schnitt reinigten. So wurde ein linsenförmiges Granulat erzeugt. Im Anschluss härtete das Granulat für 2 Tage aus und wurde schließlich endgültig verpackt.

Im Folgenden wurde das erzeugte Granulat über den Trichter in die rotierende Schnecke einer Spritzgießmaschine eingefüllt. Darin wurde das Granulat durch die Rotation in Richtung Schneckenspitze gefördert. Hierbei entstand durch Zerteilen und Scheren des Granulats die sogenannte Friktionswärme, die zusammen mit der Heizung des Zylinders, in dem die Schnecke rotiert, für die Aufschmelzung und weiteren Homogenisierung des Granulats sorgte. Zur Verfügung stand ein 2-fach Werkzeug mit einem Unterfluranguss. Das Werkzeug wurde auf 150°C temperiert, die Düse auf 45°C, der Zylinder auf ca. 70°C bis 80°C und der Einzug auf 45°C temperiert.

Im weiteren Prozess-Verlauf staute sich die Schmelze an der Schneckenspitze, wo sich die Auslassdüse befindet, die zu diesem Zeitpunkt geschlossen war. Hierbei entstand Druck auf die Schnecke. Da diese axial beweglich ist, schraubte sie sich, ähnlich wie ein Korkenzieher, rückwärts unter diesem Druck aus der geschmolzenen Masse heraus. Durch einen Hydraulikzylinder oder mittels elektrischer Steuerung wurde die Rückwärtsbewegung der Schnecke gebremst. Dadurch entstand in der Schmelze Staudruck. Durch diesen Staudruck in Verbindung mit der Rotation der Schnecke wurde die Schmelze verdichtet und homogenisiert.

Daraufhin sammelte sich vor der Düse Granulat an, das für das Volumen des zu fertigenden Werkstücks ausreichte, wodurch die Rotation der Schnecke eingestellt und der Dosiervorgang beendet war. Zeitgleich erfolgte eine aktive Entlastung der Schnecke, um eine Dekomprimierung der Schmelze herbeizuführen.

Daraufhin erfolgte das Anfahren der Spritzeinheit an die Schließeinheit. Sie wurde mit der Düse angedrückt und die Schnecke wurde zeitgleich rückseitig unter Druck gesetzt. Hierbei entstand ein Druck von 1.200 bar, mit dessen Hilfe die Schmelze durch die Düse sowie das Angusssystem des Werkzeugs in dessen Hohlraum gedrückt wurde.

In der Form härtete das Material aus und erstarrte schließlich. Hierbei öffnete sich die Auswerfer-Seite des Werkzeugs. Dabei drangen Stifte in die Kavität des Werkzeugs ein und drückten das Formteil aus der Form (Zwangsentformung). Es fiel nun in einen bereitstehenden Behälter. Letztlich wurde das Produkt gestapelt und verpackt.

## Patentansprüche

1. Granulat bestehend aus natürlichen, bevorzugt rein pflanzlichen Bestandteilen umfassend pflanzliche Stärke und pflanzliches Mehl aufweisend eine Feststoffzusammensetzung aus
| | |
|---|---|
| Pflanzliche Stärke | 20-65% |
| Pflanzliches Mehl | 10-55% |
| pflanzliches Fett und/oder pflanzliches Öl | 0,5-7% |
| optionale Zusätze | 0-35% |
wobei das Verhältnis von pflanzlich Stärke zu pflanzlichem Mehl 1:1,6-1:5 oder 1,6:1-5:1 ist und wobei das Granulat eine Restfeuchte von 10-50%, bevorzugt 12-25% aufweist,
wobei die pflanzliche Stärke native Stärke ist und Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, bevorzugt Weizenstärke, Kartoffelstärke, Maisstärke, Reisstärke, Tapiokastärke oder eine Mischung davon umfasst; und
wobei das pflanzliche Mehl Weizenmehl, Reismehl, Dinkelmehl, Roggenmehl, Gerstenmehl, Hafermehl, Hirsemehl, Tapiokamehl, Mandelmehl, Guarkernmehl, Johannisbrotbaummehl, oder eine Mischung davon umfasst, und
wobei die optionalen Zusätze Zucker, Süßungsmittel umfassend Xylit, Oligofructose, Apfelextrakt, Magermilchpulver, Milch, vegane Milch, Zirtonensäure, Hühnervolleipulver, veganes Hühnervolleipulver, Salz, Natron, pflanzliche Stearate umfassend Magnesiumstearat, Karamell, Sojalecithin, und das Enzym Preventase, ein oder mehrere lebensmittelechte Farbstoffe, natürliche Aromen und/oder Geschmacksstoffe oder eine Mischung davon umfassen.

2. Das Granulat nach Anspruch 1, wobei die Gesamtmenge an pflanzlicher Stärke und pflanzlichem Mehl mindestens 65% der Gesamtmasse beträgt.

3. Das Granulat nach Anspruch 1 oder 2, wobei das Verhältnis von pflanzlicher Stärke zu pflanzlichem Mehl 1:2,5 oder 2,5:1 beträgt.

4. Das Granulat nach einem der Ansprüche 1-3, wobei das pflanzliche Öl und/oder pflanzliche Fett gehärtetes pflanzliches Öl und/oder gehärtetes pflanzliches Fett ist.

5. Verwendung des Granulats nach einem der Ansprüche 1-4 im Spritzgussverfahren zur Herstellung von Waffeln und Gebäck.

6. Verfahren zur Herstellung von Waffeln und Gebäck,
wobei das Verfahren ein Spritzgussverfahren ist und
wobei das Granulat nach einem der Ansprüche 1-4 das alleinige Ausgangsmaterial für das Spritzgussverfahren ist,
umfassend die Schritte:
a) Einfüllen des Granulats nach einem der Ansprüche 1-5 in die Spritzgießmaschine,
b) Spritzgiessen der Masse in eine gewünschte Form.

7. Waffeln und Gebäck, hergestellt nach dem Verfahren gemäß Anspruch 6, wobei die Waffeln und das Gebäck eine sichtbare Einspritzstelle der Spritzgussform aufweisen.

8. Waffeln und Gebäck nach Anspruch 7,
wobei die Waffel ein Träger von Speisen und Dips ist,
wobei der Träger essbar ist,
wobei der Träger vollständig biologisch abbaubar und kompostierbar ist, und
wobei der Träger eine Eiswaffel, eine Waffel für den Transport von Lebensmitteln, ein Teller, eine Schale, ein Becher, eine Pommes Schale, einen Behälter für Dips und Saucen umfasst.

9. Waffeln und Gebäck nach Anspruch 7, wobei das Gebäck ein Keks ist.

## Claims

1. Granules consisting of natural, preferably purely plant-based ingredients comprising plant-based starch and plant-based flour having the following solid composition:
| | |
|---|---|
| Plant-based starch | 20-65 wt% |
| Plant-based flour | 10-55 wt% |
| Plant-based fat and/or Plant-based oil | 0,5-7 wt% |
| Optional additives | 0-35 wt%, |
wherein the ratio of plant-based starch to plant-based flour is 1:1.6-1:5 or 1.6:1-5:1 and wherein the granules have a residual moisture content of 10-50%, preferably 12-25%
wherein the plant-based starch is a native starch and comprises wheat starch, potato starch, corn starch, tapioca starch or starch from cassava, tuberous bean, batate, yam, tuberous pawpaw, arakacha, tuberous wood sorrel, tuberous nasturtium, ulluco, East Indian arrowroot, arrowroot, achira, taro, tannia, white water lily, yellow water lily or chayote, preferably wheat starch, potato starch, corn starch, rice starch, tapioca starch or a mixture thereof; and
wherein the plant-based flour comprises wheat flour, rice flour, spelt flour, rye flour, barley flour, oat flour, millet flour, tapioca flour, almond flour, guar gum flour, carob flour or a mixture thereof; and
wherein the optional additives comprise sugar, sweetener comprising xylitol, oligofructose, apple extract, skimmed milk powder, milk, vegan milk, citric acid, whole egg powder, vegan whole egg powder, salt, sodium bicarbonate, plant-based stearates comprising magnesium stearate, caramel, soy lecithin, and the enzme preventase, one or more food colorants, natural aromas and /or flavorings or a mixture thereof.

2. The granules according to claim 1, wherein the total amount of plant-based starch and plant-based flour is at least 65% by weight of the total mass of solids.

3. The granules according to claim 1 or 2, wherein the ratio of plant-based starch to plant-based flour is 1:2.5 or 2.5:1.

4. The granules according to any one of claims 1-3, wherein the plant-based oil and/or plant-based fat is hardened plant-based oil and/or hardened plant-based fat.

5. Use of the granules according to any one of claims 1-4 for the production of wafers and pastries by injection molding.

6. Method for the production of wafers and pastries,
wherein the method is an injection molding process and
wherein the granules according to any one of claims 1-4 are the sole material for the process, comprising the steps of:
a) filling the granules according to any one of claims 1-5 into the injection molding machine,
b) injection molding the mass into a desired shape.

7. Wafers and pastry, produced by the method according to claim 6, wherein the wafers and pastries have a visible injection point of the injection mold.

8. Wafers and pastry according to claim 7,
wherein the wafer is a carrier of food and dips,
wherein the carrier is edible,
wherein the carrier is fully biodegradable and compostable, and
wherein the carrier is an ice cream cup, a wafer for the transportation of food, a plate, a bowl,
a cup, a chip tray, or a cup for sauces or dips.

9. Wafers and pastry according to claim 7, wherein the pastry is a biscuit.

## Revendications

1. Granulés constitués de composants naturels, de préférence purement végétaux comprenant de l'amidon végétal et de la farine végétale présentant une composition solide de
| | |
|---|---|
| amidon végétal | 20-65 % |
| farine végétale | 10-55 % |
| graisse végétale et/ou huile végétale | 0,5-7 % |
| additifs en option | 0-35 % |
dans lesquels le rapport entre l'amidon végétal et la farine végétale est de 1:1,6-1:5 ou 1,6:1-5:1 et dans lesquels les granulés présentent une humidité résiduelle de 10 à 50 %, de manière préférée de 12 à 25 %,
dans lesquels l'amidon végétal est de l'amidon natif et comprend de l'amidon de blé, de l'amidon de pomme de terre, de l'amidon de maïs, de l'amidon issu du tapioca ou de l'amidon de manioc, du jicama, de la patate douce, de la racine d'igname, de la gesse tubéreuse, de l'arracacha, de l'oxalis tubéreuse, de la capucine tubéreuse, de l'ulluco, de l'arrow-root des Indes orientales, de l'arrow-root, de l'achira, du taro, du macabo, du nénuphar blanc, du nénuphar jaune ou de la chayote, de manière préférée de l'amidon de blé, de l'amidon de pomme de terre, de l'amidon de maïs, de l'amidon de riz, de l'amidon de tapioca ou un mélange de ceux-ci ; et
dans lesquels la farine végétale comprend de la farine de blé, de la farine de riz, de la farine d'épeautre, de la farine de seigle, de la farine d'orge, de la farine d'avoine, de farine de millet, de la farine de tapioca, de la poudre d'amande, de la gomme de guar, de la farine de caroube ou un mélange de ceux-ci, et
dans lesquels les additifs en option comprennent du sucre, un édulcorant comprenant du xylitol, de l'oligofructose, de l'extrait de pomme, du lait écrémé en poudre, du lait, du lait végétalien, de l'acide citrique, de la poudre d'œufs entiers, de la poudre œufs entiers végétalienne, du sel, du bicarbonate de soude, des stéarates végétaux comprenant du stéarate de magnésium, du caramel, de la lécithine de soja et l'enzyme Preventase, un ou plusieurs colorants, arômes et/ou agents aromatisants naturels à usage alimentaire ou un mélange de ceux-ci.

2. Granulés selon la revendication 1, dans lesquels la quantité totale d'amidon végétal et de farine végétale est égale au moins à 65 % de la masse totale.

3. Granulés selon la revendication 1 ou 2, dans lesquels le rapport entre l'amidon végétal et la farine végétale est de 1:2,5 ou 2,5:1.

4. Granulés selon l'une quelconque des revendications 1 à 3, dans lesquels l'huile végétale et/ou la graisse végétale sont une huile végétale hydrogénée et/ou une graisse végétale hydrogénée.

5. Utilisation des granulés selon l'une quelconque des revendications 1 à 4 dans le procédé de moulage par injection pour la fabrication de gaufres et de pâtisseries.

6. Procédé de fabrication de gaufres et de pâtisseries,
dans lequel le procédé est un procédé de moulage par injection et
dans lequel les granulés selon l'une quelconque des revendications 1 à 4 sont la seule matière première pour le procédé de moulage par injection,
comprenant les étapes :
a) de remplissage des granulés selon l'une quelconque des revendications 1 à 5 dans la machine de moulage par injection,
b) de moulage par injection de la masse dans la forme souhaitée.

7. Gaufres et pâtisseries, fabriquées selon le procédé selon la revendication 6, dans lesquelles les gaufres et les pâtisseries présentent un point d'injection visible du moule d'injection.

8. Gaufres et pâtisseries selon la revendication 7,
dans lesquelles la gaufre est un support de nourriture et de dips,
dans lesquelles le support est comestible,
dans lesquelles le support est entièrement biodégradable et compostable, et
dans lesquelles le support comprend une gaufrette à glace, une gaufrette pour le transport d'aliments, une assiette, un bol, un gobelet, un bol à frites, un récipient pour dips et sauces.

9. Gaufres et pâtisseries selon la revendication 7, dans lesquelles la pâtisserie est un biscuit.
